# EUROPEAN PATENT SPECIFICATION

(11) **EP 1 728 436 B1**
(45) Date of publication and mention of the grant of the patent: **14.01.2009**
(21) Application number: 06011093.9
(22) Date of filing: 30.05.2006
(51) Int. Cl.: A23G 9/22, F25C 1/00

(54) **Cassette for molding of ice mass for consumer ice products**
Kasette zum Formen von Eismasse für Konsumenten-Eisprodukte
Casette pour mouler une masse de glace dans la fabrication de produits glacés de consommation

(30) Priority: 01.06.2005 DK 200500794
(43) Date of publication of application: 06.12.2006
(73) Proprietor: Tetra Laval Holdings & Finance S.A., 1009 Pully (CH)
(72) Inventor: Hermansen, Carsten, 8210 Ärhus (DK)
(74) Representative: Schmidt, Jens Joergen

(56) References cited:
- GB-A- 698 814
- GB-A- 878 419
- GB-A- 1 508 589
- US-A1- 2004 159 974

## Description

### Technical area of application

The present invention relates to a cassette for the moulding of ice mass for consumer ice products in accordance with the preamble to claim 1.

### State of the art

It is known to produce consumer ice products by means of cassettes which consist of half parts of ice moulds on each side, so that by placing several cassettes with the sides towards each other there are formed complete ice moulds in which the more or less liquid ice mass can be filled.

There has gradually evolved a considerable market for "3D-products", i.e. ice items which have diverse bulges and depressions in the surface, and the use of cassettes is particularly advantageous in connection with consumer ice which need to have a high degree of detail and are able to be produced at a high rate under compact production conditions.

An apparatus for molding a 3D frozen dessert product is known from the patent publication US 2004/0159974.

In order to ensure the ice quality and at the same time maintain a high rate of production, it is important that the ice mass is frozen quickly. This is done by circulating a coolant inside the cassettes, so that the heat from the ice mass is conducted via the cassette itself and further out into the coolant. Therefore, it is important that the cassettes are made of a material with good thermal conductivity, and for this reason these are typically made of stainless steel or nickel, since out of regard for hygiene it is also important that the cassettes are easy to clean.

The increasing demands made on the shape of the ice moulds and the cassettes have led to increasing production costs of these, not least since use is typically made of a considerable number of cassettes for an ice production plant, which makes the production costs of the cassettes an important factor for the overall price of the plant. Moreover, the production costs are particularly problematic when other types of ice products are to be made over and above traditional products such as new series of consumer ice products with particularly many details.

The object of the invention is to create a cassette for moulding of consumer ice products which does not have the disadvantages and the problems connected with the above-mentioned known technique. It is a special object of the invention to create a flexible cassette which can be produced easily and can make many types of ice products in an advantageous manner.

### The invention

The invention comprises a cassette for the moulding of an ice mass into consumer ice products, and which comprises at least one inner chamber for a flow of coolant or heating medium, where said flow runs into said least one inner chamber through one or more inlets and out of said cassette through one or more outlets, characterised in that at least the parts which separate said coolant or heating medium from said ice mass are produced in a plastic material, where this plastic material has a thermal conductivity which is larger than 5, such as between 5 and 10 and preferably larger than 10 W/m·K.

Plastic is considered by experts as being a heat insulating material, since it typically has a very poor thermal conductivity. It has proved, however, that if use is made of plastic material with a higher thermal conductivity than that of the consumer ice product, the ice mass can be cooled at a satisfactory rate and at the same time a consumer ice product of high quality can be made.

The thermal conductivity of the ice mass is dependent on a number of conditions, i.e. the content of air in the ice mass and the content and type of sweeteners, in particular of sugar types.

Plastic in all aspects is in essence another material in relation to stainless steel, and when an injection mould has first been made the costs of producing the cassettes are limited. Especially in relation to the costs entailed in the processing of cassettes of stainless steel, regardless of whether these are made by pressing, milling, other metal processing methods or combinations hereof. Therefore, from the point of view of costs, it is very advantageous to produce cassettes in plastic. Also, the items can be produced in the correct and precise dimensions.

By the expression "at least the parts which separate", shall be understood that the cassette probably consists of several parts. It could, for example, be two cassette half parts, inlet and outlet parts, inner parts to conduct the coolant or the heating medium, and mould parts to shape the ice mass. It is thus at least the parts of which the cassette consists which exist physically between coolant or the heating medium and ice mass when the ice mass is being shaped by means of the cassette.

The expression "coolant" is to be understood as something which can cool or freeze a given ice item, where a typical temperature for a coolant will be between minus 20 and minus 50 degrees centigrade, and where the coolant will typically surrender 3 to 5 degrees centigrade in connection with the cooling of the contents of the moulding cassettes.

The expression "heating medium" is to be understood as something which can heat or thaw free a given ice item, so that the surface of the ice is not damaged when the cooled or frozen ice is removed from the ice-moulding means.

One aspect of the invention is that at least a first and a second cassette part are produced in said plastic material.

The cassette comprises one or more cassette parts, and since they have a very complicated shape in order to accommodate the many functions the cassette shall have, it is advantageous to produce the cassette parts in plastic, since this will considerably reduce the manufacturing costs in relation to the costs involved when, for example, the parts were made of stainless steel.

An aspect of the invention is that said plastic material is a plastic composite containing a plastic such as: Polypropylene (PP), Polyphenylene sulphide (PPS), Thermoplastic elastomer (TPE), Polycarbonate (PC), Polybutylene terephthalate (PBT), Polyamide 4,6 (PA 4,6), Liquid Crystalline Polymer (LCP), and an additive material such as fibres or powders containing glass, carbon, metal or ceramic materials, e.g. carbon fibres, aluminium nitride or boron nitride.

It is advantageous to produce the parts of which the cassette consists in one of the above-mentioned plastic materials, as these materials can be obtained in qualities with good thermal conductivity.

An aspect of the invention is that said plastic material has a thermal conductivity which is between 2 and 10, mainly between 3 and 8 and preferably between 4 and 6, such as 5 times higher than the thermal conductivity of the consumer ice which shall be formed by means of the cassette.

By selecting plastic material with a thermal conductivity in the said interval, an advantageous relationship is achieved between manufacturing costs and material characteristics, especially with regard to thermal conductivity.

An aspect of the invention is that said cassette comprises more than one cavity for the moulding of said ice mass or for assembly of parts of ice moulds for the moulding of said ice mass.

It is advantageous to let the cassette comprise cavities or recesses for the moulding of ice mass or for assembly of replaceable ice moulds, since this provides the possibility for cooling of the ice mass through all vertical surfaces, the bottom, and if it is a complicated mould which is wholly or partly closed, also through the top.

An aspect of the invention is that said cassette comprises two substantially equally long longitudinal vertical or substantially vertical surfaces and two transverse vertical or substantially vertical surfaces, where the one of these transverse surfaces is broader than the other.

By shaping the cassettes in the above-mentioned manner, it is possible to use the cassettes for ice moulding machines of the traditional round-table type, which is advantageous since this form of machine for ice moulding has proved advantageous in application and is therefore very widely used.

An aspect of the invention is that said at least one inlet and said at least one outlet are placed on one or more of said vertical surfaces.

Typically, at least the outlet will be placed in the bottom of the cassette, since it is here that the coolant or heating medium will naturally collect after it has been in contact with the inner side of the cassette. It is not expedient, however, to have tubes, pipes or the like on the underside of the cassettes, as this will wholly or partly prevent, for example, ice with production errors from being allowed to fall down out of the machine on which the cassettes are mounted. Similarly, it will not be expedient to have piping on the upper side of the cassettes, as this will render the filling of the ice moulds and the removal of the finished ice products more difficult. Therefore, it is advantageous to utilize, due to the low manufacturing costs with plastic, that it is profitable to make a relatively complicated shape of the cassette which makes it possible for the inlet and outlet to be placed on one or more of the vertical sides, so that the inconveniences with piping on the upper or under side of the cassette are hereby avoided.

An aspect of the invention is that said at least one inlet and said at least one outlet are placed on the same of said vertical surfaces.

It is advantageous to place inlet and outlet on the same vertical side, since this hereby simplifies the construction of the ice moulding machine.

An aspect of the invention is that said at least one inlet and said at least one outlet are placed on the narrower of the two said transverse vertical surfaces.

By placing both the inlet and the outlet on the cassette's narrow surface, which faces in towards the centre of the round-table ice moulding machine, an advantageous piping/tubing arrangement can be achieved on said machine.

An aspect of the invention is that said cassette comprises at least two inner chambers separated by at least one dividing plate, and that at least one of the said chambers is placed on top of at least a second of the said chambers.

It is advantageous to place a chamber on top of a second chamber inside the cassette, in that this provides the possibility of monitoring and controlling the flow of coolant or heating medium in the cassette, and it provides the possibility of operation with differentiated pressure in the different chambers.

An aspect of the invention is that said at least one inlet is connected directly with the lowermost of the said two inner chambers, and that said at least one outlet is connected directly with the uppermost of the said at least two inner chambers.

It is advantageous to conduct coolant or heating medium in lowermost and out uppermost, as this provides the possibility for an advantageous flow of the medium through the cassette.

An aspect of the invention is that said cassette contains at least one fluid connection which in a controlled manner leads said coolant or heating medium from said lowermost chamber and up to a height over said dividing plate in the bottom of said uppermost chamber, where said coolant or heating medium leave said fluid connection and said coolant or heating medium freely come into contact with the inner side of said uppermost chamber. Hereby is achieved an advantageous flow of said coolant or heating medium inside the cassette, which results in an effective heat exchange with the ice mass.

### The drawings

In the following, the invention is explained in more detail with reference to the drawings, where
Fig. 1 shows an exploded perspective view of an embodiment of a cassette for moulding of consumer ice mass according to the invention,
Fig. 2 shows the cassette from fig. 1 seen from the side,
Fig. 3 shows the cassette from fig. 1 seen from the end,
Fig. 4 shows the cassette from fig. 1 seen from above,
Fig. 5 shows an embodiment of a half part of an ice mould seen in perspective,
Fig.6 shows a section view of an embodiment of a cassette seen from the side,
Fig. 7 shows a section of a filling machine seen from above.

### Detailed description

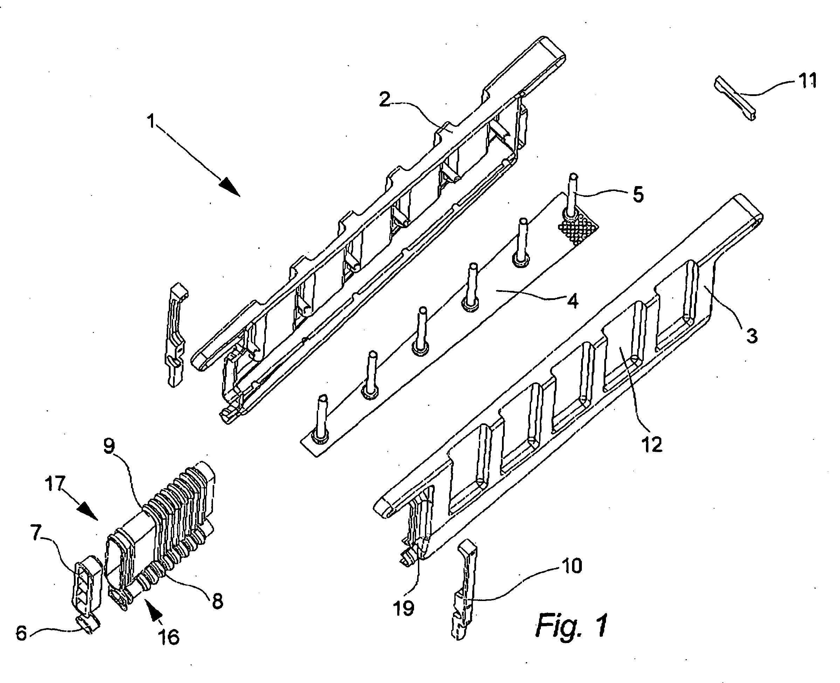

Fig. 1 shows an exploded perspective view of an embodiment of a cassette for moulding of consumer ice products according to the invention.

The cassette is preferably made of one or more plastic materials which are selected from a group consisting of plastic materials modified with thermally conductive additive material. The plastic material can be a plastic composite containing a plastic such as: Polypropylene (PP), Polyphenylene sulphide (PPS), Thermoplastic elastomer (TPE), Polycarbonate (PC), Polybutylene terephthalate (PBT), Polyamide 4,6 (PA 4,6), Liquid Crystalline Polymer (LCP), and an additive material such as fibres or powders containing glass, carbon, metal or ceramic materials, e.g. carbon fibre, aluminium nitride or boron nitride. All of the plastic materials have a thermal conductivity which is greater than the thermal conductivity of the ice mass Ice mass typically has a thermal conductivity of approx. 2 W/m·K (frozen water), where additives such as sugar can change this value.

In a preferred embodiment, the cassette is produced in a plastic composite containing polypropylene (PP) and carbon fibres. The material will have a high thermal conductivity of between 5 and 10 W/m·K such as 5.01 W/m·K. A plastic composite containing metal or ceramic materials will typically have a thermal conductivity of more than 10 W/m·K.

The individual parts of the cassette can, for example, be made of different plastic materials in order to achieve different properties in the parts. Similarly, one or more areas of a part in the cassette can be of a plastic material, while the remaining area of the part can be of another material.

In this embodiment, the cassette 1 consists of a first cassette part 2 and a corresponding second cassette part 3, which substantially are symmetrical around a vertical longitudinal plane. Between these cassette half parts 2, 3 there is a dividing plate 4 mounted with a number of fluid connections 5 in the form of pipes.

On the narrowest transverse vertical surface 19 of the cassette there is connected an inlet 16 consisting of an inlet stub 6 and an inlet piece 8, and an outlet 17 consisting of an outlet stub 7 and an outlet piece 9. The inlet 16 and the outlet 17 are secured on the cassette 1 by means of two fixing brackets 10. Finally, the cassette 1 is equipped with an end bracket 11.

The figure shows a series of holes in the dividing plate 4, where in a preferred embodiment the whole of the plate is perforated. The plate ensures pressure equalization between the parts of the cassette, whereby the flow through the outlet pipes becomes uniform.

In the shown embodiment of the invention, all of the above-mentioned cassette parts are made of plastic materials, but in a second embodiment of the invention the dividing plate 4, the pipes 5 or inlet and outlet stubs 6, 7 could, for example, be made of another material such as stainless steel.

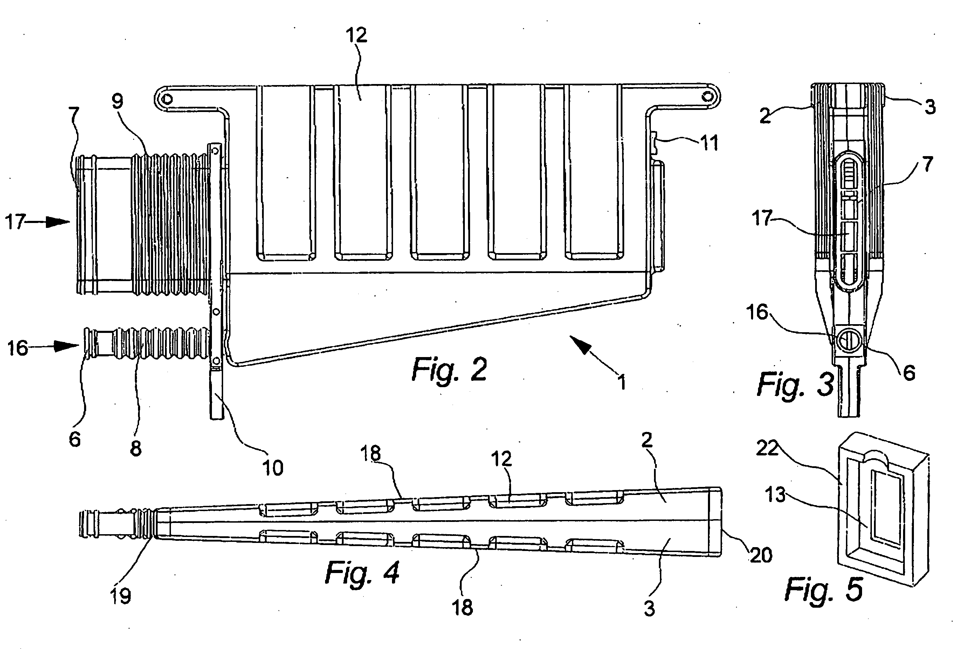

Fig. 2 shows an embodiment of a cassette 1 seen from the side. On the side of the cassette 1 there are a number of approximately rectangular cavities 12. In the embodiment shown, there are shown five cavities 12, but in another second embodiment of the invention the sides could be provided with more or fewer cavities 12, such as two, three, four, six, seven or eight, and the shape of the cavities themselves can also comprise a wide range of different figures. In a preferred embodiment, these can in themselves function as half parts of moulds for consumer ice products. The half parts can have any possible physical appearance and can herewith mould almost any desired ice item.

In another embodiment they can be equipped with independent half parts of ice moulds 13 such as that shown in fig. 5, which are secured to the cavities 12.

Fig. 3 shows a cassette 1 seen from that end where the inlet 16 and the outlet 17 are placed.

Fig. 4 shows a cassette 1 seen from above. In the figure it is seen that there are cavities 12 on both of the cassette's vertical longitudinal sides 18. In addition to the two equally-long longitudinal vertical surfaces 18, the cassette also comprises a broad transverse vertical surface 20 and a narrow transverse vertical surface 19. In this embodiment of the invention, both the inlet 16 and the outlet 17 are connected to the narrow transverse vertical surface 19, but in another embodiment either the inlet 16 or outlet 17 or both could be placed on one of the other vertical sides 18,20, or in the top or the bottom of the cassette. -

Fig. 5 shows an embodiment of a half part of an ice mould 13 seen in perspective. In this embodiment, an ice product will not immediately be able to be drawn out above of the ice mould 13 and its corresponding half part when these are assembled by the contact surface on the ice moulds 13 being held or pressed against each other. Therefore, it is necessary that the two ice mould half parts 13 of the ice mould are moved away from each other before the fully moulded ice can be taken out.

Alternatively, the ice mould is shaped in such a manner that the fully moulded ice can be removed without the ice mould having to be opened. This can primarily occur by that an opening in the ice mould being so large that the ice can immediately and unhindered be taken out of the ice mould.

The ice mould half part 13 can be fixed to the cavities 12 by means of slide-ways, snap locks, securing means such as screws, bolts, glue, (plastic) welding or another securing means or method, which makes it possible that the ice mould half parts 13 can be released relatively easily from the cavities in the longitudinal cassette sides 18 and replaced with other ice mould half parts 13.

The design of the ice mould half part 13 shown here is only one of a large number of possible embodiments.

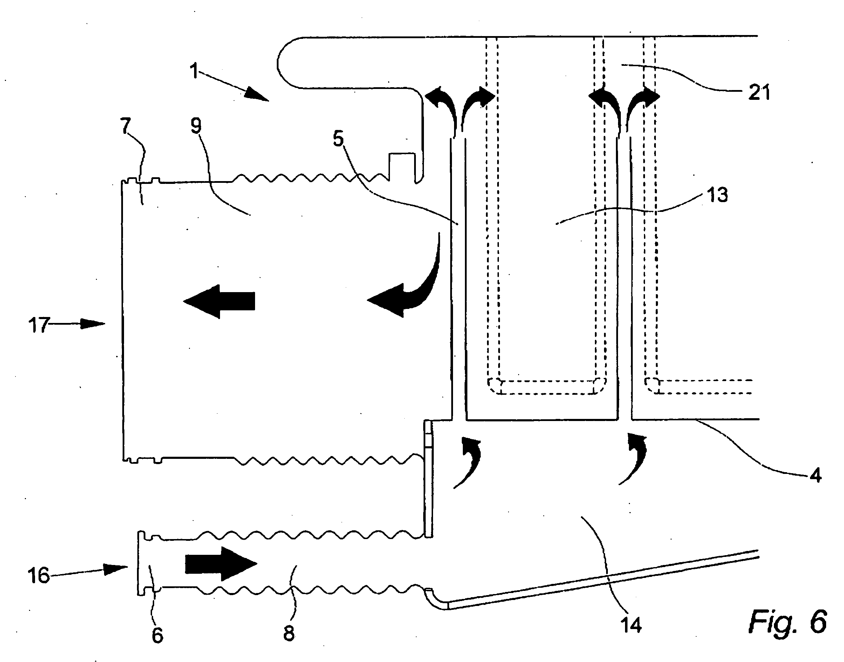

Fig. 6 shows an embodiment of a cassette 1 as a vertical section view through the assembly surface between the two cassette half parts 2, 3 seen from the side. The arrows show that the coolant or heating medium flows in through the inlet 16 and further out in a lower chamber 14 defined by the cassette half parts 2, 3 and the dividing plate 4. From here, said medium is pressed up through a fluid connection 5 which in this case is a series of pipes. Hereafter, the medium leaves the pipes and sprays out over the upper part of the inner side of the cassette half parts 2, 3, including the inner side of the cavities 12 in the upper chamber 21, after which the coolant or heating medium runs out through the outlet 17.

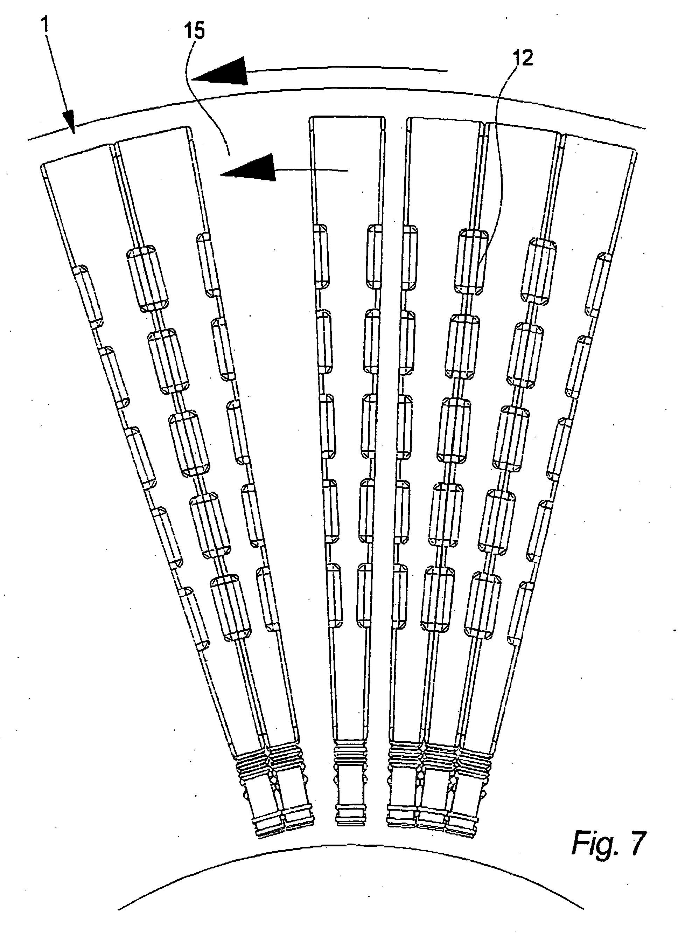

Fig. 7 shows a section of an embodiment of a filling machine (carrousel) seen from above. The figure shows that the cassettes 1 can be arranged in a circular manner as a conventional ice moulding machine of the round-table type. One or more places around the circular arrangement, there is a removal station 15 where the opening necessary for the removal of the ice items can be created between the cassettes 1. This place 15 can have a fixed position when the ring of cassettes is moved in the circular direction, but alternatively the ring arrangement as a whole can be immovable, merely providing that the cassettes 1 are made pivotal in such a manner that they can be successively opened from each other as at the place of removal 15.

The section of the round table of the filling machine which is shown in fig. 7 is shown without ice moulds 13 mounted in the cavities 12. In the embodiment shown, the ice items could be moulded by means of the cavities 12 in the sides of the cassettes 1, but in a preferred embodiment of the invention the cavities are provided with parts of ice moulds 13, by means of which the ice are moulded.

It shall be mentioned that the freezing cassettes will also be able to be produced in other embodiments, and thus the filling machine does not need to be a circular system.

In the above, the invention is described in connection with concrete embodiments, such as shown in the drawings, but it will be obvious to with a person skilled in the art that the invention can be varied in innumerable ways within the scope of the subsequent claims.

### List

- 1.: Cassette
- 2.: First cassette part
- 3.: Second cassette part
- 4.: Dividing plate
- 5.: Fluid connection
- 6.: Inlet stub
- 7,: Outlet stub
- 8.: Inlet piece
- 9.: Outlet piece
- 10.: Fixing bracket
- 11.: End bracket
- 12.: Cavity in cassette sides
- 13.: Half part of ice mould
- 14.: Lower chamber
- 15.: Removal station
- 16.: Inlet
- 17.: Outlet
- 18.: Longitudinal vertical surface
- 19.: Narrow transverse vertical surface
- 20.: Broad transverse vertical surface
- 21.: Upper chamber
- 22.: Contact surface

## Claims

1. Cassette (1) for moulding of ice mass for consumer ice products comprising at least one inner chamber (14,21) for a flow of coolant or heating medium where said flow runs into said at least one inner chamber (14, 21) through one or more inlets (16) and out of said cassette (1) through one or more outlets (17) wherein
at least the parts which separate said coolant or heating medium from said ice mass are made of a plastic material, **characterised in that** this plastic material has a thermal conductivity which is larger than 5 and preferably larger than 10 W/m·K.

2. Cassette (1) according to claim 1, wherein at least a first and a second cassette part (2, 3) are made of said plastic material.

3. Cassette (1) according to claim 1 or 2, **characterised in that** said plastic material is a plastic composite containing a plastic selected from the group consisting of Polypropylene (PP), Polyphenylene sulphide (PPS), Thermoplastic elastomer (TPE), Polycarbonate (PC), Polybutylene terephthalate (PBT), Polyamide 4,6 (PA 4, 6) Liquid Crystalline Polymer (LCP) and an additive material such as fibre or powders containing glass, carbon, metal or ceramic materials, e.g. carbon fibres, aluminium nitride or boron nitride.

4. Cassette (1) according to any of claim 2 or 3, **characterised in that** said plastic material has a thermal conductivity which is between 2 and 10, mainly between 3 and 8 and preferably between 4 and 6, such as 5 times higher than the thermal conductivity of the consumer ice product which is to be moulded by means of the cassette (1).

5. Cassette (1) according any of the preceding claims, **characterised in that** said cassette (1) comprises more than one cavity (12) for the moulding of said ice mass or for the mounting of parts of ice moulds (13) for the moulding of said ice mass.

6. Cassette (1) according to any of the preceding claims, **characterised in that** said cassette (1) comprises two longitudinal vertical or mainly vertical surfaces (18) of substantially equal length, and two transverse vertical or mainly vertical surfaces (19, 20), where one of these transverse surfaces is broader than the other.

7. Cassette (1) according to claim 6, **characterised in that** said at least one inlet (16) and said at least one outlet (17) are placed on one or more of said vertical surfaces (18,19,20).

8. Cassette (1) according to claim 6, **characterised in that** said at least one inlet (16) and said at least one outlet (17) are placed on the same of said vertical surfaces (18, 19,20).

9. Cassette (1) according to claim 6, **characterised in that** said at least one inlet (16) and said at least one outlet (17) are placed on the narrower (19) of the two said transverse vertical surfaces.

10. Cassette (1) according to any of the preceding claims, **characterised in that** said cassette (1) comprises at least two inner chambers (14, 21) separated by at least one dividing plate (4), and **in that** at least one of said chambers is placed on top of at least one other of the said chambers.

11. Cassette (1) according to claim 10, **characterised in that** said at least one inlet (16) is connected directly with the lowermost (14) of the said at least two inner chambers, and that said at least one outlet (17) is connected directly with the uppermost (21) of the said at least two inner chambers.

12. Cassette (1) according to claim 10 or 11, **characterised in that** said cassette (1) contains at least one fluid connection (5) which in a controlled manner leads said coolant or heating medium from said lowermost chamber (14) and up to a height above said dividing plate (4) in the bottom of said uppermost chamber (21), where said coolant or heating medium leaves said fluid connection (5) and said coolant or heating medium comes freely into contact with the inner side of said uppermost chamber (21).

## Patentansprüche

1. Kassette (1) zum Formen von Eismasse für Konsumenten-Eisprodukte, enthaltend mindestens eine innere Kammer (14, 21) für eine Strömung eines kühlenden oder wärmenden Mediums, wobei die Strömung durch einen oder mehrere Einlässe (16) in die mindestens eine innere Kammer (14, 21) und durch einen oder mehrere Auslässe (17) aus der Kassette (1) fließt, wobei mindestens die Teile, welche das kühlende oder wärmende Medium von der Eismasse trennen, aus einem Kunststoffmaterial gemacht sind, **dadurch gekennzeichnet, dass** dieses Kunststoffmaterial eine thermische Leitfähigkeit hat, welche größer als 5 und vorzugsweise größer als 10 W/m·K ist.

2. Kassette (1) nach Anspruch 1, wobei mindestens ein erster und ein zweiter Kassettenteil (2, 3) aus dem Kunststoffmaterial hergestellt sind.

3. Kassette (1) nach Anspruch 1 oder 2, **dadurch gekennzeichnet, dass** das Kunststoffmaterial ein Verbundkunststoff ist, der einen Kunststoff, ausgewählt aus der Gruppe bestehend aus Polypropylen (PP), Polyphenylensulfid (PPS), Thermoplastelastomer (TPE), Polycarbonat (PC), Polybutylenterephthalat (PBT), Polyamid 4,6 (PA 4,6), Flüssigkristallpolymer (LCP), und ein Zusatzmaterial, so wie Fasern oder Pulver, enthaltend Glas-, Kohlenstoff-, Metall- oder Keramikmaterialien, z. B. Carbonfasern, Aluminiumnitrid oder Bornitrid, enthält.

4. Kassette (1) nach einem der Ansprüche 2 oder 3, **dadurch gekennzeichnet, dass** das Kunststoffmaterial eine thermische Leitfähigkeit hat, welche zwischen 2 und 10, hauptsächlich zwischen 3 und 8, und vorzugsweise zwischen 4 und 6, so wie fünfmal höher als die thermische Leitfähigkeit des Konsumenten-Eisprodukts ist, das mittels der Kassette (1) zu formen ist.

5. Kassette (1) nach einem der vorhergehenden Ansprüche, **dadurch gekennzeichnet, dass** die Kassette (1) mehr als einen Hohlraum (12) zum Formen der Eismasse oder zum Anbringen von Teilen von Eisformen (13) zum Formen der Eismasse umfasst.

6. Kassette (1) nach einem der vorhergehenden Ansprüche, **dadurch gekennzeichnet, dass** die Kassette (1) zwei longitudinale vertikale oder hauptsächlich vertikale Flächen (18) von im Wesentlichen gleicher Länge, und zwei vertikale oder hauptsächlich vertikale Querflächen (19, 20) umfasst, wobei eine dieser Querflächen breiter als die andere ist.

7. Kassette (1) nach Anspruch 6, **dadurch gekennzeichnet, dass** der mindestens eine Einlass (16) und der mindestens eine Auslass (17) an einer oder mehreren der vertikalen Flächen (18, 19, 20) platziert sind.

8. Kassette (1) nach Anspruch 6, **dadurch gekennzeichnet, dass** der mindestens eine Einlass (16) und der mindestens eine Auslass (17) an derselben der vertikalen Flächen (18, 10, 20) platziert sind.

9. Kassette (1) nach Anspruch 6, **dadurch gekennzeichnet, dass** der mindestens eine Einlass (16) und der mindestens eine Auslass (17) an der schmäleren (19) der zwei vertikalen Querflächen platziert sind.

10. Kassette (1) nach einem der vorhergehenden Ansprüche, **dadurch gekennzeichnet, dass** die Kassette (1) mindestens zwei innere Kammern (14, 21) umfasst, die durch mindestens eine Trennplatte (4) separiert sind, und dass mindestens eine der Kammern oberhalb von mindestens einer anderen der Kammern platziert ist.

11. Kassette (1) nach Anspruch 10, **dadurch gekennzeichnet, dass** der mindestens eine Einlass (16) direkt mit der untersten (14) von den mindestens zwei inneren Kammern verbunden ist, und dass der mindestens eine Auslass (17) direkt mit der obersten (21) von den mindestens zwei inneren Kammern verbunden ist.

12. Kassette (1) nach Anspruch 10 oder 11, **dadurch gekennzeichnet, dass** die Kassette (1) mindestens eine Fluidverbindung (5) enthält, welche in einer kontrollierten Weise das kühlende oder wärmende Medium von der untersten Kammer (14) und aufwärts zu einer Höhe oberhalb der Trennplatte (4) im Boden der obersten Kammer (21) führt, wobei das kühlende oder wärmende Medium die Fluidverbindung (5) verlässt und das kühlende oder wärmende Medium mit der Innenseite der obersten Kammer (21) frei in Kontakt kommt.

## Revendications

1. Cassette (1) pour le moulage de masse de glace pour produits de glace de consommation comprenant au moins une chambre intérieure (14, 21) pour un écoulement d'agent de refroidissement ou de chauffage où ledit écoulement passe dans ladite au moins une chambre intérieure (14, 21) à travers une ou plusieurs entrées (16) et hors de ladite cassette (1) à travers une ou plusieurs sorties (17), dans laquelle au moins les parties qui séparent ledit agent de refroidissement ou de chauffage de ladite masse de glace sont faites d'une matière plastique, **caractérisée en ce que** cette matière plastique possède une conductivité thermique qui est supérieure à 5 et de préférence supérieure à 10 W/m·K.

2. Cassette (1) selon la revendication 1, dans laquelle au moins des première et seconde parties de cassette (2, 3) sont faites de ladite matière plastique.

3. Cassette (1) selon l'une quelconque des revendications 1 ou 2, **caractérisée en ce que** ladite matière plastique est un composite plastique contenant un plastique sélectionné parmi le groupe constitué de polypropylène (PP), polyphénylène sulfide (PPS), élastomère thermoplastique (TPE), polycarbonate (PC), polybutylène téréphtalate (PBT), polyamide 4,6 (PA 4,6), polymère cristallin liquide (LCP) et un matériau additif tel qu'une fibre ou des poudres contenant des matériaux de verre, carbone, métal ou céramique, par exemple des fibres de carbone, nitrure d'aluminium ou nitrure de bore.

4. Cassette (1) selon une quelconque revendication 2 ou 3, **caractérisée en ce que** ladite matière plastique possède une conductivité thermique qui est entre 2 et 10, essentiellement entre 3 et 8 et de préférence entre 4 et 6, telle que 5 fois plus importante que la conductivité thermique du produit de glace de consommation qui est destiné à être moulé au moyen de la cassette (1).

5. Cassette (1) selon l'une quelconque des revendications précédentes, **caractérisée en ce que** ladite cassette (1) comprend plus d'une cavité (12) pour le moulage de ladite masse de glace ou pour le montage de parties de moules de glace (13) pour le moulage de ladite masse de glace.

6. Cassette (1) selon l'une quelconque des revendications précédentes, **caractérisée en ce que** ladite cassette (1) comprend deux surfaces longitudinalement verticales ou essentiellement verticales (18) de longueur sensiblement égale, et deux surfaces transversalement verticales ou essentiellement verticales (19, 20), où une de ces surfaces transversales est plus large que l'autre.

7. Cassette (1) selon la revendication 6, **caractérisée en ce que** ladite au moins une entrée (16) et ladite au moins une sortie (17) sont placées sur une ou plusieurs desdites surfaces verticales (18, 19, 20).

8. Cassette (1) selon la revendication 6, **caractérisée en ce que** ladite au moins une entrée (16) et ladite au moins une sortie (17) sont placées sur la même desdites surfaces verticales (18, 19, 20).

9. Cassette (1) selon la revendication 6, **caractérisée en ce que** ladite au moins une entrée (16) et ladite au moins une sortie (17) sont placées sur la plus étroite (19) des deux dites surfaces transversalement verticales.

10. Cassette (1) selon l'une quelconque des revendications précédentes, **caractérisée en ce que** ladite cassette (1) comprend au moins deux chambres intérieures (14, 21) séparées par au moins une plaque de division (4), et **en ce qu'**au moins une desdites chambres est placée par-dessus au moins une autre desdites chambres.

11. Cassette (1) selon la revendication 10, **caractérisée en ce que** ladite au moins une entrée (16) est raccordée directement à la chambre la plus basse (14) desdites au moins deux chambres intérieures, et que ladite au moins une sortie (17) est raccordée directement à la chambre la plus haute (21) desdites au moins deux chambres intérieures.

12. Cassette (1) selon la revendication 10 ou 11, **caractérisée en ce que** ladite cassette (1) contient au moins un raccord de fluide (5) qui, de manière contrôlée, conduit audit agent de refroidissement ou de chauffage à partir de ladite chambre la plus basse (14) et jusqu'à une hauteur au-dessus de ladite plaque de division (4) au fond de ladite chambre la plus haute (21), où ledit agent de refroidissement ou de chauffage quitte ledit raccord de fluide (5) et ledit agent de refroidissement ou de chauffage entre librement en contact avec le côté intérieur de ladite chambre la plus haute (21).
